# EUROPEAN PATENT SPECIFICATION

(11) **EP 0 704 029 B1**
(45) Date of publication and mention of the grant of the patent: **18.02.1998**
(21) Application number: 94917730.7
(22) Date of filing: 13.06.1994
(51) Int. Cl.: F16C 35/07

(54) **TOLERANCE RINGS**
TOLERANZRINGE
MANCHONS DEFORMABLES

(30) Priority: 16.06.1993 GB 9312445
(43) Date of publication of application: 03.04.1996
(73) Proprietor: LILLESHALL PLASTICS AND ENGINEERING LTD., Newbury, Berkshire RG13 1BU (GB)
(72) Inventor: SLAYNE, Andrew Robert, Patchway, Bristol BS12 5RL (GB); DUNN, Jeffrey, Earl, Westbury on Trym, Bristol BS9 4SN (GB)
(74) Representative: Kiddle, Simon John
(86) International application number: GB9401266
(87) International publication number: WO9429609

(56) References cited:
- DE-B- 2 018 367
- DE-C- 838 237
- FR-A- 2 175 427
- US-A- 4 286 894
- US-A- 4 608 881

## Description

The present invention relates to tolerance rings, and more particularly to tolerance rings for use in applications which normally require multiple tolerance rings.

Tolerance rings are fitted between components to provide friction between them, for instance to retain a component in a housing or to communicate torque between two components.

In general, tolerance rings are formed from a strip, usually of metal, pressed into an annulus having a track of teeth formed on its surface. The track of teeth runs around the circumference of the ring, the teeth projecting inwardly and/or outwardly, depending on the application to which the tolerance ring is going to be put. Often tolerance rings have a gap in the annulus to allow them to be easily fitted. Such a ring is disclosed in US-A-4 286 894.

In some applications, tolerance rings are fitted to provide friction between a shaft and a component that locates around the shaft. In such applications, the tolerance ring communicates torque between the shaft and the component, when the torque applied between them is below a limiting value. However, when the torque applied to the shaft and the component is above this limiting value, the tolerance ring will permit them to slip relative to one another, thereby preventing the shaft and the component from being exposed to torsional damage. This limiting value of torque will typically be selected to be below the torsional strength of the shaft and the component mechanically linked by the tolerance ring.

In other applications, tolerance rings are used to mount bearing assemblies in apertures in cylindrical housings. In these applications, the tolerance ring has inwardly projecting teeth and locates around the bearing assembly to hold the assembly in the aperture by friction. This avoids the need to machine the assembly and housing accurately, to provide an interference fit between them.

An important use of tolerance rings is in the steering columns of cars. In this application, tolerance rings are used in the mechanism to connect the steering lock to the shaft of the steering column. Tolerance rings are held around the circumference of the shaft by a sleeve which is engaged by the steering lock when it is in a locked condition. When the steering lock is unlocked, the tolerance rings and sleeve are free to move with the shaft, allowing the driver to steer the car.

Tolerance rings help prevent car theft through a thief being able to exert sufficient torque on the shaft of the steering column to break the steering lock. Tolerance rings are therefore designed to allow the sleeve and shaft to slip relative to one another, when the torque applied to the shaft and sleeve is above a limiting amount. This limiting value of torque is chosen to be above that which a person can apply to the steering column through the steering wheel.

Thus, when the steering lock is in a locked condition, a thief is unable to exert enough torque through the steering wheel to steer the car and is also unable to force the steering lock, as the tolerance ring permits the sleeve to slip relative to the shaft. This slippage has the further advantage of avoiding damage to the steering column or steering lock.

In general, tolerance rings are either accommodated in circumferential grooves machined into the shaft of the steering column or mounted on its surface. The tolerance rings are held in place by a sleeve that locates around the tolerance rings and the shaft.

In the assembly operation, the sleeve is drawn over the tolerance rings, either while they are held in place against the walls of the grooves accommodating the tolerance rings or, where the tolerance rings are mounted on the surface of the shaft, an assembly tool is placed in an abutting relationship with the tolerance rings, while the sleeve is fitted over them. After assembly, friction holds the tolerance rings in position between the shaft and sleeve.

However, in general it is considered that two tolerance rings, each with a separate track of teeth, are needed to provide the required limiting amount of torque between the sleeve and shaft before slippage occurs. This has the disadvantage that either two grooves need to be machined into the shaft of the steering column to accommodate the tolerance rings or, if the rings are mounted on the surface of the shaft, a spacer ring needs to be included between the individual tolerance rings to prevent one riding up on the other when the sleeve is fitted. The first arrangement increases machining costs of the shaft and may undesirably weaken it. In the second arrangement, the assembly of the mechanism can be complicated and expensive.

Attempts to overcome this problem by providing a single tolerance ring having a wider track of teeth, intended to increase the limiting value of torque between the shaft and sleeve, have also failed to provide the desired torsional characteristics detailed above.

Further, in modern steering columns the length of shaft available for the tolerance ring and sleeve is progressively becoming shorter.

The present invention provides the use of a tolerance ring for communicating torque between a steering column and a sleeve located around the steering column wherein the tolerance ring has a plurality of axially spaced apart tracks of teeth on its surface, the tracks of teeth running around the circumference of the tolerance ring.

The tracks of teeth may project inwardly and/or outwardly, depending on the application for which the tolerance ring is intended. For instance, inwardly projecting teeth are suitable for holding components in apertures in housings, while outwardly projecting teeth can be used in steering columns, as mentioned above.

Preferably, the tolerance ring is made of a strip of metal formed into a ring and has the tracks of teeth pressed into it. The pitch, shape and size of the teeth will depend on the application for which the tolerance ring is intended. Preferred materials for the tolerance ring include carbon steel, stainless steel or Monel metal.

Although, in general, the different tracks of teeth will have the same characteristics, certain applications may require tracks of teeth having different spacing, shape or size.

Preferably, the tolerance ring will be provided with a gap in the annulus to permit it to be easily fitted around a shaft. The gap also makes some adjustment of the size of the tolerance ring possible.

In general, the tolerance rings will have two tracks of teeth. However, the present invention extends to tolerance rings having further tracks of teeth.

When tolerance rings are fitted, it is found that the teeth tend to cut to some degree into the components frictionally linked by the tolerance rings, forming grooves in one or both of these components. Thus, in applications requiring multiple single track tolerance rings of the prior art, each tolerance ring formed a set of these grooves when it was fitted, unless great care was taken to ensure that the sets of teeth on separate tolerance rings were aligned.

This is undesirable as it can lead to inconsistency between assemblies including the tolerance rings, as the alignment of the grooves are formed by the tracks of teeth of the individual tolerance rings is not fixed. Thus, the presence of these grooves is a source of variation in performance of assemblies including multiple single track tolerance rings.

The present invention helps to overcome this as the plurality of axially spaced tracks of teeth are in fixed alignment with each other. This means that assemblies incorporating the tolerance rings will have grooves having the same orientation cut into them, when the tolerance rings are fitted.

Further, the teeth of adjacent tracks are preferably aligned with each other, so that a single set of grooves will be created when the tolerance ring is fitted. This has the advantage of simplifying assembly and minimising weakening of the components as only one set of grooves is created.

Thus, the present invention provides a single tolerance ring that can effectively replace the multiple tolerance rings required in the prior art. Also, it is compact, and suitable for use where only limited space is available for the tolerance ring.

As the tolerance ring used in the present invention is a single component, this helps to reduce production costs and simplifies the assembly operation.

Either only a single groove in the shaft is required to accommodate the tolerance ring or there is no need for the spacer ring sometimes required between the prior art multiple tolerance rings. Further, it is found that the tolerance rings of the present invention can occupy less space than the equivalent prior art tolerance rings, while retaining the desired torsional characteristics. This is at least in part due to the elimination of the spacer ring or the length of shaft between individual tolerance rings accommodated in grooves.

As mentioned above, tolerance rings are also fitted around components, eg bearing assemblies, to hold them in apertures in a housing by friction, eliminating the need for an interference fit between the component and the aperture in the housing. Tolerance rings having multiple tracks of teeth can be used to simplify the assembly operation where multiple components are located adjacent each other in a housing.

When single track tolerance rings have been used in the past, bearing assemblies have often been held in place in apertures adjacent each other and separated by a stepped portion against which the tolerance rings and assemblies abut. Accordingly, the bearing assemblies are fitted to the housing separately.

It is also found that tolerance rings having a single wide track of teeth, sufficient to retain multiple components in a single aperture in the housing, have inferior performance relative to two tolerance rings with single tracks of teeth.

Moreover, tolerance rings having multiple tracks of teeth allow multiple components to be fitted at the same time to a single aperture, while retaining the performance associated with separate tolerance rings having single tracks of teeth. This is because the components are supported independently by the plurality of axially spaced apart tracks of teeth of the tolerance ring.

Preferred embodiments of the present invention will now be further described with reference to the accompanying drawings in which:
Figure 1 shows an end view of a tolerance ring having two tracks of axially spaced apart teeth;
Figure 2 shows a longitudinal cross-section of the tolerance ring of figure 1;
Figures 3 and 4 show diagrammatic fragmentary longitudinal cross-sectioned views of two prior art tolerance rings fitted to the shafts of steering columns;
Figure 5 shows a similar view to figure 3 of a tolerance ring of a preferred embodiment of the present invention accommodated in a single groove in a shaft;
Figure 6 shows a similar view to figure 4 of the tolerance ring fitted on the surface of a different shaft;
Figure 7 shows a side view of two bearing assemblies fitted in a housing using two tolerance rings of the prior art, each having a single track of teeth, with the housing shown in cross-section;
Figure 8 shows a similar view to figure 7 of two bearing assemblies fitted in a housing using a single tolerance ring having a single wide track of teeth, with the housing shown in cross-section;
Figure 9 shows a similar view to figures 7 and 8 of two bearing assemblies fitted in a housing using a tolerance ring of the present invention having two axially spaced apart tracks of teeth;
Figure 10 shows a graph showing the effect that increasing the width of a track of teeth on a tolerance ring has on the spring stiffness of the ring;
Figure 11 shows a graph showing the effect that increasing the width of a track of teeth on a tolerance ring has on the force that can be generated by compressing the teeth; and,
Figures 12a and b show a comparison of the performance between a tolerance ring having a single wide band of teeth and a tolerance ring having two narrow bands of teeth.

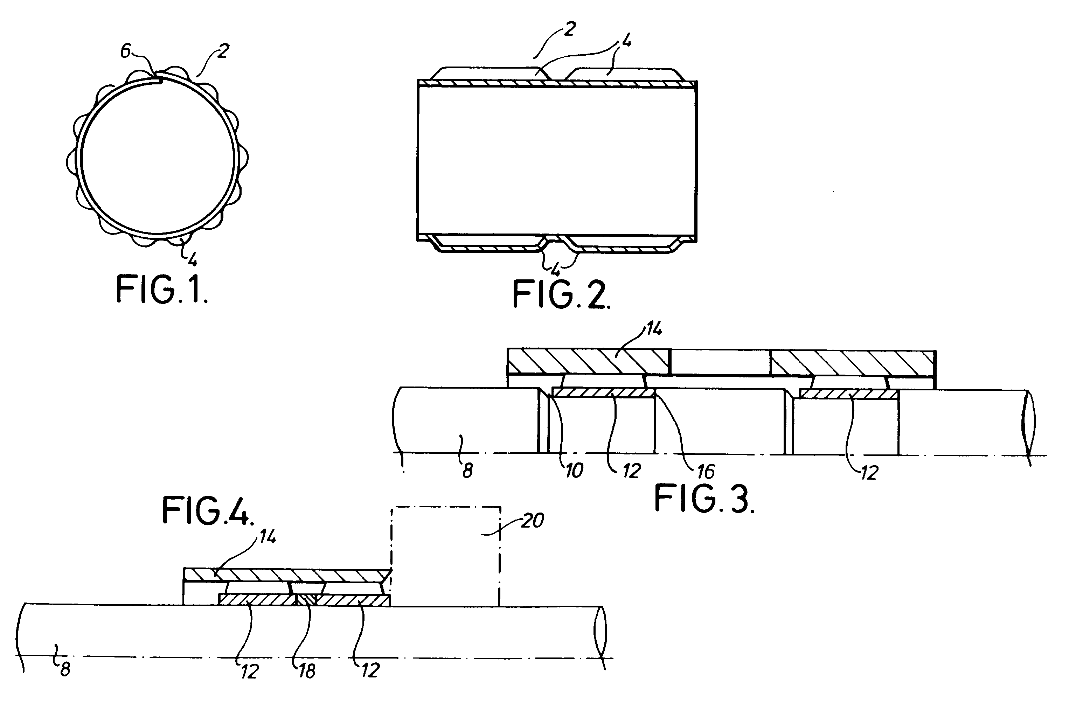

Figures 1 and 2 show a tolerance ring 2 of the present invention, having two tracks of teeth 4. The teeth 4 of the tolerance ring 2 having identical pitch, shape and size, and are arranged so that the teeth of the tracks are axially aligned with each other. Figure 1 also shows a gap 6 in the tolerance ring 2 to enable it to be easily fitted around a shaft.

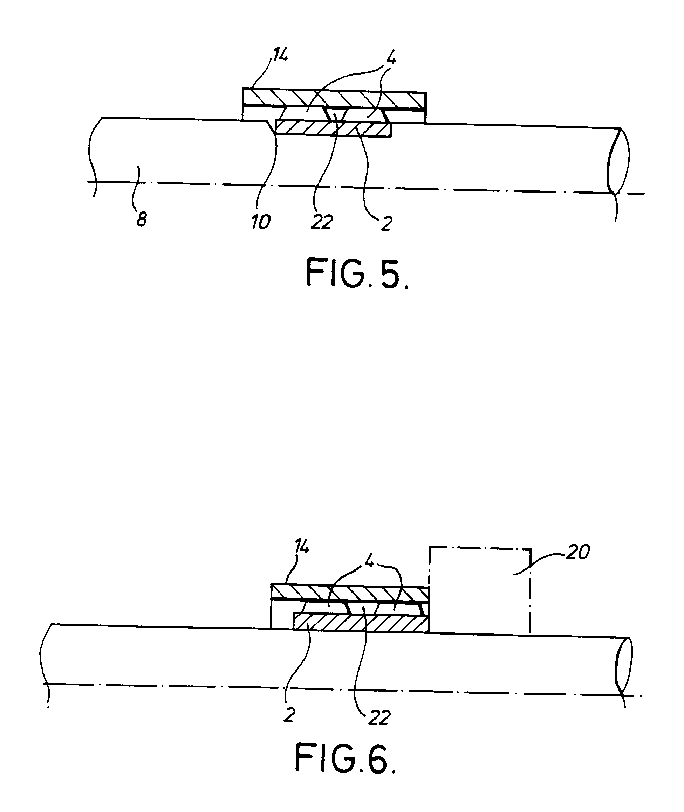

Figures 3 and 4 show a portion of a shaft 8 of a steering column to which two single track tolerance rings 12 have been fitted.

In figure 3, the shaft 8 is provided with grooves 10 which accommodate tolerance rings 12. In an assembled state, the tolerance rings 12 are held in place in the grooves 10 by a sleeve 14. Friction between the tolerance rings 12, the sleeve 14 and the grooves 10 locks the sleeve on the shaft.

The mechanism is assembled by placing the tolerance rings 12 in the grooves 10 machined in the shaft 8. The walls 16 of the grooves 10 keep the tolerance rings 12 in place, while the sleeves 14 are drawn over the tolerance rings 12 to trap them.

Figure 4 shows the prior art arrangement used where grooves 10 cannot be machined in the shaft 8. In this arrangement, two tolerance rings 12, separated by a spacer ring 18, are located on the surface of the shaft 8. An assembly tool 20 is placed in an abutting relationship to one of the tolerance rings 12 on the surface of the shaft 8. The assembly tool 20 keeps the tolerance rings 12 and spacer ring 18 in position as the sleeve 14 is pushed over the tolerance rings 12.

Figure 5 shows a tolerance ring 2 of the present invention having two substantially parallel tracks of teeth 4 running around the outer surface of its circumference. As only a small gap 22 is required between the two tracks of teeth 4, the tolerance ring 2 occupies a shorter length of shaft 8 than the prior art tolerance rings 12 described above.

In addition, as the tracks of teeth are in fixed alignment, this helps to minimise variation in performance between assemblies including the tolerance ring. Thus, a more consistent assembly can be produced.

Further, as the tracks of teeth 4 are aligned with one another, only one set of grooves (not shown) are cut into the sleeve 14 when it is drawn over the tolerance ring 2. This reduces the weakening of the sleeve 14 and helps to minimise the variation in performance caused when multiple sets of grooves are created by multiple, single track tolerance rings 12, where the sets of teeth on the separate tolerance rings 12 are not aligned.

Figure 6 shows the tolerance ring 2 of figure 5 fitted on the surface of a shaft 8. Once again, this occupies a shorter length of shaft, as the one-piece tolerance ring 2 eliminates the need for a spacer ring 18 between individual, single-track tolerance rings 12. As in figure 4, an assembly tool 20 is placed in an abutting relationship with the tolerance ring 2 to allow the sleeve 14 to be drawn over the tolerance ring 2.

Under normal driving conditions, a tolerance ring 2 will be free to move with the shaft 8 and the sleeve 14. However, when the shaft is immobilised by the engagement of the steering lock with the sleeve 14, a thief is unable to exert enough torque to the shaft 8 via the steering wheel to steer the car. Moreover, if the thief tries to apply mechanical advantage to break the steering lock, this will be greater than the limiting value of torque, this limiting value being chosen to be below the torsional strength of the shaft 8 or sleeve 14. The tolerance ring will therefore allow the sleeve 14 and shaft 8 to slip relative to one another. This prevents damage to the sleeve 14, the shaft 8 or the steering lock which engages the sleeve 14, when it is in a locked condition.

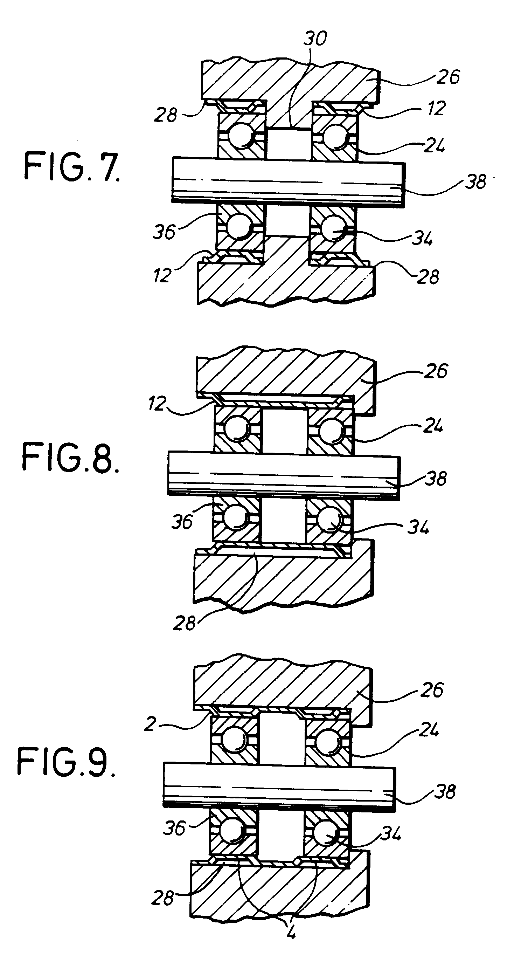

Figures 7 to 9 show how tolerance rings can be used to retain bearing assemblies 24 in a housing 26, by locating around the bearing assemblies 24 to hold them in the housing 26 by friction. In figure 7, the housing 26 is provided with two cylindrical apertures 28, separated by a step 30, while in figures 8 and 9 a single cylindrical aperture 28 is provided with a step 30 defining the end of the aperture 28.

The bearing assemblies 24 comprise a plurality of ball bearings 34 retained in a cage 36. The assemblies 24 receive a shaft 38, and allow the shaft to rotate in the housing 26 through contact with the bearings 34.

In figure 7, a single track tolerance ring 12 is fitted between each bearing assembly 24 and the housing 26, retaining the assemblies in position by friction. However, two operations are required to assemble the mechanism and the bearing assemblies 24 need to be fitted from both ends of the housing 26.

In figure 8, a tolerance ring having a single wide track of teeth sufficient to retain both bearing assemblies 24 is used. However, it is found that although this allows the mechanism to be assembled from one side of the housing 26 in a single operation, the performance of a tolerance ring having one wide track of teeth is not as good as two separate tolerance rings.

Figure 9 shows a tolerance ring 2 having two tracks of axially spaced apart teeth 4 provided on surface, so that the teeth 4 project inwardly. The multiple tracks of teeth allow the mechanism to be assembled in a single operation from one side of the housing 26, while retaining the performance associated with two tolerance rings 12, each having a single track of teeth. This is because the components retained by a tolerance ring 2 having a plurality of axially spaced apart tracks of teeth are supported independently.

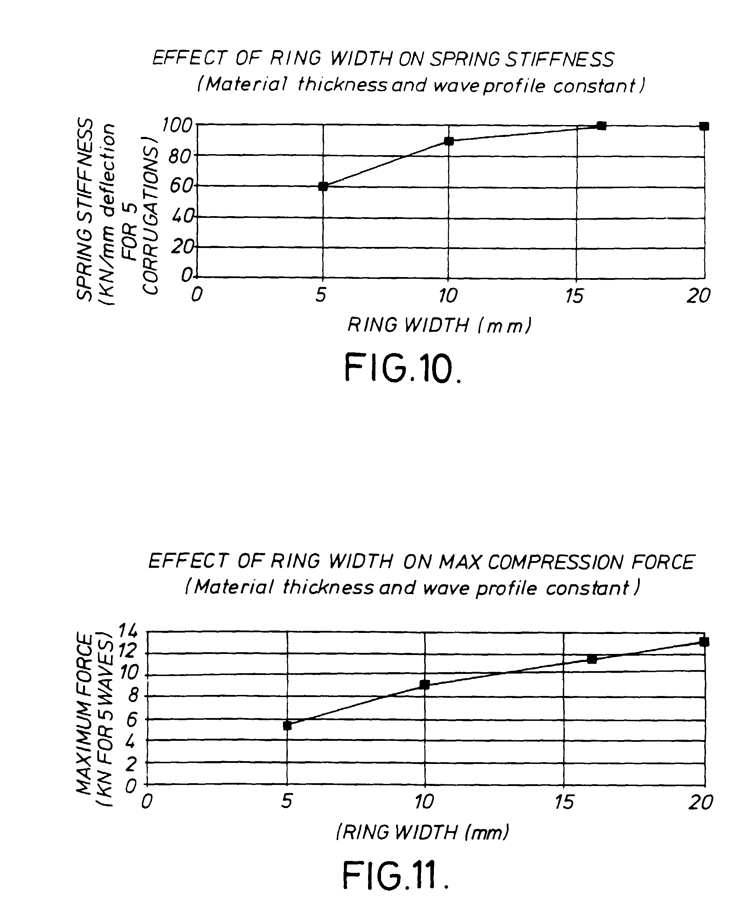

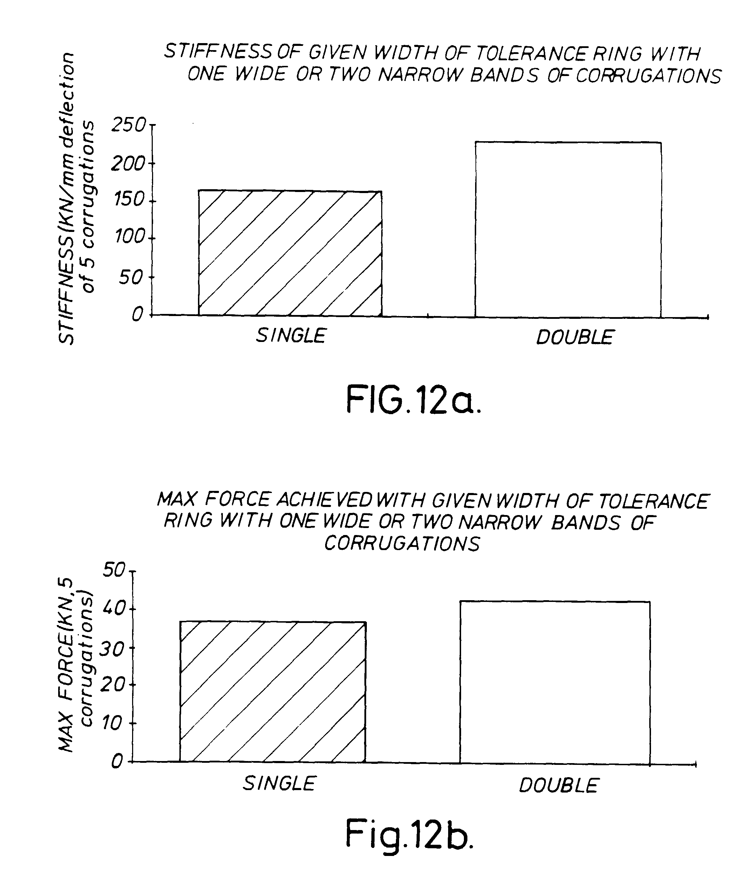

Figures 10 and 11 depict test results showing the variation of spring stiffness and compression force as the width of a tolerance ring increases. The data was obtained on flat test strips of tolerance ring material, the strips having five complete corrugations or teeth. Various widths of strip, having corresponding widths of teeth, were tested and the results are summarised in the graphs.

Figure 10 shows that spring stiffness increases with the width of the track of teeth to a maximum value, after which increasing the width has little effect on the spring stiffness. This explains, at least in part, why replacing multiple tolerance rings having single tracks of teeth with a single tolerance ring having a wider track of teeth, leads to a reduction in performance.

In figure 11, force increases as the width of the teeth increases, although the rate of increase goes down as the teeth become wider. Thus, the maximum force that can be achieved with a narrow ring is more than half that which can be achieved with a ring that is twice as wide.

Thus, figures 10 and 11 show that a tolerance ring of a given width will be capable of generating more force if it is provided with several tracks of teeth, compared to a single track of teeth. This in turn means that higher torque levels can be transmitted by the ring or the width of a tolerance ring for a given application can be reduced.

Figures 12 a and b show bar charts comparing the stiffness and maximum compression force achievable using a tolerance ring of fixed width having either one wide or two narrow tracks of teeth. These charts show that for a tolerance ring of a given width, providing two narrow tracks of teeth provides enhanced performance over one with a single wide track of teeth.

## Claims

1. Use of a tolerance ring for communicating torque between a steering column and a sleeve located around the steering column wherein the tolerance ring has a plurality of axially spaced apart tracks of teeth on its surface, the tracks of teeth running around the circumference of the tolerance ring.

2. The use according to claim 1 wherein the teeth in adjacent tracks are aligned with each other.

3. The use according to claim 1 or claim 2 wherein the ring has two tracks of axially spaced apart teeth.

4. The use according to any one of the preceding claims wherein the tracks of teeth have the same pitch, shape and size.

5. The use according to any one of the preceding claims wherein the ring has a gap in its circumference, to facilitate the fitting of the tolerance ring around a shaft.

6. The use according to claim 5 wherein the gap in the ring allows the size of the ring to be varied.

## Patentansprüche

1. Verwendung eines Toleranzrings zur Übertragung von Drehmoment zwischen einer Lenksäule und einer um die Lenksäule herum angeordneten Hülse, worin der Toleranzring eine Vielzahl axial beabstandeter Zahnspuren auf seiner Oberfläche aufweist, wobei die Zahnspuren um den Umfang des Toleranzrings herum verlaufen.

2. Verwendung nach Anspruch 1, worin die Zähne in benachbarten Spuren miteinander ausgerichtet sind.

3. Verwendung nach Anspruch 1 oder 2, worin der Ring zwei Spuren axial beabstandeter Zähne aufweist.

4. Verwendung nach einem der vorhergehenden Ansprüche, worin die Zahnspuren die gleiche Teilung, Form und Größe besitzen.

5. Verwendung nach einem der vorhergehenden Ansprüche, worin der Ring einen Spalt in seinem Umfang aufweist, um das Anbringen des Toleranzrings um eine Welle herum zu erleichtern.

6. Verwendung nach Anspruch 5, worin es der Spalt im Ring ermöglicht, die Größe des Rings zu variieren.

## Revendications

1. Utilisation d'une bague de tolérance pour communiquer un couple entre une colonne de direction et un manchon placé autour de la colonne de direction, où la bague de tolérance présente plusieurs chemins de dents espacés axialement sur sa surface, les chemins des dents s'étendant autour de la circonférence de la bague de tolérance.

2. Utilisation selon la revendication 1, où les dents dans les chemins adjacents sont alignées les unes aux autres.

3. Utilisation selon la revendication 1 ou la revendication 2, où la bague présente deux chemins de dents espacés axialement.

4. Utilisation selon l'une des revendications précédentes, où les chemins des dents ont le même pas, la même forme et la même taille.

5. Utilisation selon l'une des revendications précédentes, où la bague présente une fente dans sa circonférence, pour faciliter l'adaptation de la bague de tolérance autour d'un arbre.

6. Utilisation selon la revendication 5, où la fente dans la bague permet de faire varier la taille de la bague.
